# EUROPEAN PATENT APPLICATION

(11) **EP 4 240 065 A1**
(43) Date of publication of application: **06.09.2023**
(21) Application number: 21890802.8
(22) Date of filing: 16.09.2021
(51) Int. Cl.: H04W 52/02

(54) **METHOD AND APPARATUS FOR DETERMINING WORKING MODE OF TERMINAL ANTENNA, AND TERMINAL AND STORAGE MEDIUM**

(30) Priority: 16.11.2020 CN 202011282659
(71) Applicant: GUANGDONG OPPO MOBILE TELECOMMUNICATIONS CORP., LTD., Dongguan, Guangdong 523860 (CN)
(72) Inventor: KONG, Lingling, Dongguan, Guangdong 523860 (CN)
(74) Representative: Penza, Giancarlo
(86) International application number: PCT/CN2021/118780
(87) International publication number: WO 2022/100274

(57) **Abstract**

Provided are a method and apparatus for determining a working mode of a terminal antenna, and a terminal and a storage medium. The method comprises: acquiring a received signal strength of a terminal within a target time period; on the basis of the received signal strength of the terminal within the target time period, determining that the terminal is in a first signal scenario or a second signal scenario; and if the terminal is in the first signal scenario, determining a working mode of a terminal antenna on the basis of the throughput of the terminal within the target time period. By means of the technical solution provided in the embodiments of the present application, when a terminal is in a strong signal scenario, a working mode of a terminal antenna is determined on the basis of the throughput of the terminal, such that the working mode of the terminal antenna can take both factors of the communication quality and the power consumption of the terminal into consideration, thereby reducing the power consumption of the terminal under the premise of meeting a service requirement. Representative drawing: FIG. 2

## Description

This application claims priority to Chinese patent application No. CN 202011282659.2 filed on November 16, 2020, entitled "METHOD AND APPARATUS FOR DETERMINING WORKING MODE OF TERMINAL ANTENNA, AND TERMINAL AND STORAGE MEDIUM", the content of which is hereby incorporated by reference in its entirety.

### TECHNICAL FIELD

Embodiments of the present disclosure relates to the technical field of antennas, in particularly, to a method and apparatus for determining a working mode of a terminal antenna, a terminal, and a storage medium.

### DESCRIPTION OF RELATED ART

A working mode of a terminal antenna includes a single-input single-output (SISO) mode and a multiple-input multiple-output (MIMO) mode.

In the related art, a terminal determines whether the working mode of the terminal antenna is the MIMO mode or the SISO mode based on a throughput. In at least one embodiment, when the throughput is higher, it is determined that the terminal antenna operates in the MIMO mode; and when the throughput is lower, it is determined that the working mode of the terminal antenna operates in the SISO mode.

### SUMMARY

Embodiments of the present disclosure provide a method and apparatus for determining a working mode of a terminal antenna, a terminal, and a storage medium. The solutions are as follows.

In an aspect, an embodiment of the present disclosure provides a method for determining a working mode of a terminal antenna, including:
acquiring received signal strengths of a terminal within a target time period;
determining that the terminal is in a first signal scenario or a second signal scenario based on the received signal strengths of the terminal within a target time period, where a signal strength corresponding to the first signal scenario is higher than that corresponding to the second signal scenario; and
in response to the terminal being in the first signal scenario, determining the working mode of the terminal antenna based on throughputs of the terminal within the target time period.

In another aspect, an embodiment of the present disclosure provides an apparatus for determining a working mode of a terminal antenna, including:
a signal strength acquisition module, configured to acquire received signal strengths of a terminal within a target time period;
a scenario determination module, configured to determine that the terminal is in a first signal scenario or a second signal scenario based on the received signal strengths of the terminal within a target time period, where a signal strength corresponding to the first signal scenario is higher than that corresponding to the second signal scenario; and
a working mode switching module, configured to: in response to the terminal being in the first signal scenario, determining the working mode of the terminal antenna based on throughputs of the terminal with the target time period.

In still another aspect, an embodiment of the present disclosure provides a terminal, including a processor, a memory and a wireless communication chip, where computer instructions are stored in the memory, and the wireless communication chip is configured to load and execute the computer instructions to implement the method for determining the working mode of the terminal antenna as described in the aspect.

In still another aspect, an embodiment of the present disclosure provides a computer-readable storage medium, where a computer program is stored in the computer-readable storage medium, and the computer program is loaded and executed by a processor to implement the method for determining the working mode of the terminal antenna as described in the aspect.

In still another aspect, an embodiment of the present disclosure provides a computer program product, comprising computer instructions stored in a computer-readable storage medium, where the computer instructions are capable of being read by a processor from the computer-readable storage medium and executed by the processor to implement the method for determining the working mode of the terminal antenna as described in the aspect.

### BRIEF DESCRIPTION OF DRAWINGS

FIG. 1 illustrates a schematic view of a working mode of a terminal antenna according to an embodiment of the present disclosure.
FIG. 2 illustrates a flowchart of a method for determining a working mode of a terminal antenna according to an embodiment of the present disclosure.
FIG. 3 illustrates a flowchart of another method for determining a working mode of a terminal antenna according to an embodiment of the present disclosure.
FIG. 4 illustrates a flowchart of still another method for determining the working mode of a terminal antenna according to an embodiment of the present disclosure.
FIG. 5 illustrates a structural block diagram of an apparatus for determining a working mode of a terminal antenna according to an embodiment of the present disclosure.
FIG. 6 illustrates a structural block diagram of a device according to an embodiment of the present disclosure.

### DETAILED DESCRIPTION OF EMBODIMENTS

In order to make objectives, technical solutions and advantages of this application more clear, embodiments of this application will be further described in detail combined with accompanying drawings.

The related terms involved in the embodiments of the present disclosure are introduced below.

The term "SISO" refers to single-input single-output, that is to say, a single transmitting antenna is used to send signals at a transmitting end and a single receiving antenna is used to receive signals at a receiving end.

The term "MIMO" refers to multiple-input multiple output, that is to say, multiple transmitting antennas are used at a transmitting end to transmit signals independently, and multiple receiving antennas are used at a receiving end to receive signals. It should be noted that, data streams transmitted and received by the multiple transmitting/receiving antennas may be the same, and in this case, a total radiated power (TRP) and a total isotropic sensitivity (TIS) are improved, thereby increasing a communication distance. In addition, the data streams transmitted and received by the multiple transmitting/receiving antennas can also be different, thus improving a transmission rate.

In the related art, the terminal antenna is controlled to switch between the SISO mode and the MIMO mode only according to a throughput. When the throughput is lower, if the SISO mode is used, the communication distance may be reduced and the communication may be disconnected; and when the throughput is higher, if the MIMO mode is used, the power consumption may be wasted.

Based on this, an embodiment of the present disclosure provides a method for switching a working mode of a terminal antenna. Specifically, when a terminal is in a stronger signal scenario, the working mode of the terminal antenna is determined based on a throughput of the terminal, so that the working mode of the terminal antenna can take both the communication quality and the power consumption of the terminal into consideration, and thus the power consumption of the terminal can be saved on the premise of meeting service requirements. In at least one embodiment, when the terminal is in a stronger signal scenario and the throughput is higher within a target time period, the terminal antenna is determined to use the MIMO mode, so that the TRP and TIS of the terminal are improved, thereby improving the communication quality and the communication distance. For another example, when the terminal is in a stronger signal scenario and the throughput is lower within the target time period, the terminal antenna is determined to use the SISO mode, which can effectively save the power consumption of the terminal.

In the technical solutions provided by the embodiments of the present disclosure, each block of the technical solutions is implemented by a terminal equipped with a terminal antenna, which supports both the SISO mode and the MIMO mode, and a processor of the terminal also supports the terminal antenna to flexibly switch between the SISO mode and the MIMO mode. The terminal may be a smart phone, a tablet computer, a personal computer, and the like. Alternatively, a wireless communication chip may be installed in the terminal, and each block of the technical solutions may be implemented by the wireless communication chip.

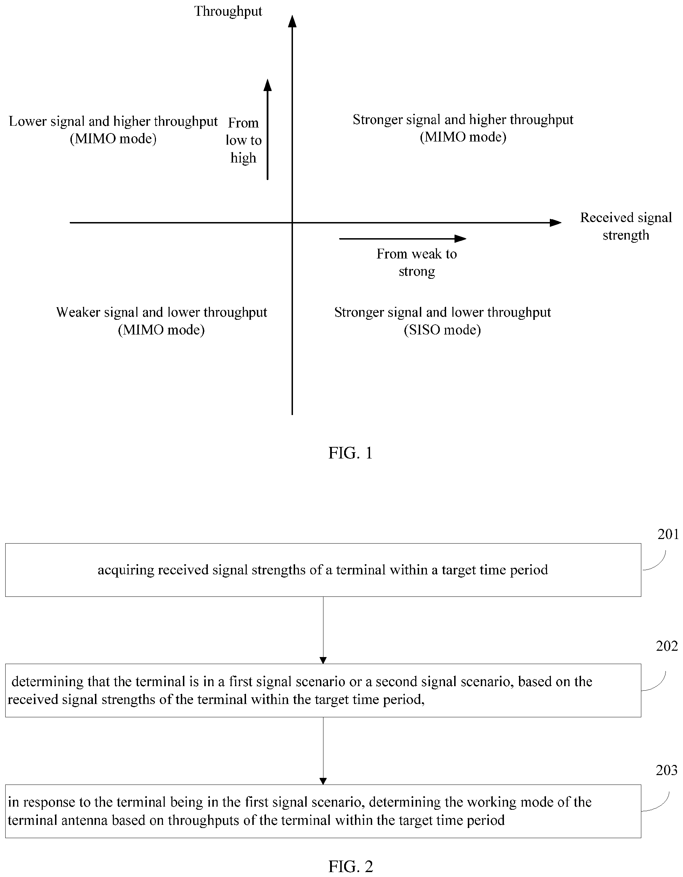

FIG. 1 illustrates a schematic view of a working mode of a terminal antenna according to an embodiment of the present disclosure. In a weaker signal scenario, the MIMO mode is used regardless of a higher or lower throughput, and the problem of a weaker signal is compensated by the MIMO mode to meet service requirements. In the stronger signal scenario, if the throughput is higher, the MIMO mode is used to improve the communication quality to meet the service requirements; if the throughput is lower, the SISO mode can also meet the service requirements, so the SISO mode is used to save the power consumption of the terminal.

FIG. 2 illustrates a flowchart of a method for determining a working mode of a terminal antenna according to an embodiment of the present disclosure. The method may specifically begin from block 201 to block 203.

At block 201, received signal strengths of a terminal within a target time period are acquired.

The received signal strength is used to characterize signal quality received by the terminal. The received signal strength may be expressed by received signal strength indication (RSSI).

The target time period may be any time period. A length of the target time period is preset by the terminal, or customized by a technician. Illustratively, the length of the target time period is 5 seconds.

In an illustrated embodiment, the terminal acquires the received signal strength of the terminal corresponding to each time unit within the target time period. Illustratively, the terminal acquires the received signal strength of the terminal every second within the target time period.

In an illustrated embodiment, the terminal acquires the received signal strength of the terminal every preset time within the target time period. The preset time is preset by the terminal, or customized by the technician. Illustratively, the preset time is 10 seconds.

At block 202, based on the received signal strengths of the terminal within the target time period, it is determined that the terminal is in a first signal scenario or a second signal scenario.

A signal strength corresponding to the first signal scenario is higher than that corresponding to the second signal scenario. The first signal scenario is also called a stronger signal scenario, and the second signal scenario is also called a weaker signal scenario. The terminal determines that it is in the stronger signal scenario or the weaker signal scenario based on the received signal strengths within the target time period.

At block 203, if the terminal is in the first signal scenario, the working mode of the terminal antenna is determined based on throughputs of the terminal within the target time period.

The throughput refers to a quantity of data successfully transmitted per unit time to a network, an apparatus, a port, a virtual circuit or other facilities. The working mode of the terminal antenna is one of an SISO mode and an MIMO mode.

In one possible implementation, when the terminal is in the stronger signal scenario and the throughputs are larger within the target time period, it is determined that the working mode of the terminal antenna is the MIMO mode, so that the TRP and TIS of the terminal can be improved, thereby improving the communication quality and a communication distance.

In another possible implementation, when the terminal is in the stronger signal scenario and the throughputs are smaller within the target time period, it is determined that the working mode of the terminal antenna is the SISO mode. Since the throughputs are smaller, the requirements on communication quality and a communication distance are lower, switching to SISO mode in this case can effectively save the power consumption of the terminal.

In summary, in the technical solution provided by the embodiment of the application, the working mode of the terminal antenna is determined based on the throughputs of the terminal when the terminal is in the stronger signal scenario, so that the working mode of the terminal antenna can take both communication quality and power consumption of the terminal into consideration, and the power consumption of the terminal is saved on the premise of meeting service requirements. In at least one embodiment, when the terminal is in the stronger signal scenario and the throughputs are larger within the target time period, it is determined that the terminal antenna should use the MIMO mode, so that the TRP and TIS of the terminal can be improved, thereby improving the communication quality and the communication distance. For another example, when the terminal is in the stronger signal scenario and the throughputs are smaller within the target time period, it is determined that the terminal antenna should use the SISO mode, which can effectively save the power consumption of the terminal.

As mentioned in the above embodiment, the terminal determines whether it is in a stronger signal scenario or a weaker signal scenario according to received signal strengths itself within the target time period. The following is an introduction to this determination process. In an illustrated embodiment provided based on the embodiment illustrated in FIG. 2, block 202 may begin from block 202a to block 202b.

At block 202a, a change trend of the received signal strengths of the terminal within the target time period is acquired.

The change trend is used to characterize change of the received signal strengths over a period of time. In at least one embodiment, the change trend of the received signal strengths of the terminal within the target time period includes a stronger trend, a weaker trend and a maintenance trend. Specifically, the stronger trend indicates that the received signal strengths of the terminal within the target time period becomes stronger as a whole, the weaker trend indicates that the received signal strengths of the terminal within the target time period becomes weaker as a whole, and the maintenance trend indicates that the received signal strengths of the terminal within the target time period remain stable as a whole.

In an illustrated embodiment, the terminal compares the received signal strength corresponding to the last time unit within the target time period with the received signal strength corresponding to the first time unit to determine the change trend of the received signal strengths of the terminal within the target time period.

In an illustrated embodiment, if the received signal strength corresponding to the last time unit is greater than the received signal strength corresponding to the first time unit, the change trend of the received signal strengths of the terminal within the target time period is the stronger trend; if the received signal strength corresponding to the last time unit is smaller than the received signal strength corresponding to the first time unit, the change trend of the received signal strengths of the terminal within the target time period is the weaker trend; if the received signal strength corresponding to the last time unit is equal to the received signal strength corresponding to the first time unit, the change trend of the received signal strengths of the terminal within the target time period is the maintenance trend.

At block 202b, based on the change trend and a signal strength threshold, it is determined that the terminal is in the first signal scenario or the second signal scenario.

The signal strength threshold is a predefined parameter, which is expressed by RSSI_Thr. Illustratively, the signal strength threshold is -75 decibels relative to one milliwatt (dBm).

In one possible implementation, the signal strength threshold is a fixed value. In another possible implementation, the signal strength threshold is negatively correlated with a delay requirement of a service scenario where the terminal is located. That is to say, the higher the delay requirement of the service scenario where the terminal is located, that is, the smaller the delay required by the service scenario where the terminal is located, the greater the signal strength threshold; the lower the delay requirement of the service scenario where the terminal is located, that is, the greater the delay requirement of the service scenario where the terminal is located, the smaller the signal strength threshold.

In an illustrated embodiment, when the signal strength threshold is determined based on the delay requirement of the service scenario where the terminal is located, a first correspondence between the service scenario where the terminal is located, the time delay requirement of the service scenario where the terminal is located, and the signal strength threshold is stored in the terminal, such that the first correspondence can be searched based on the service scenario where the terminal is located to acquire the corresponding signal strength threshold, and then the determined signal strength threshold can be transmitted to the wireless communication chip through a predetermined interface. In an illustrated embodiment, a second correspondence between the service scenario where the terminal is located and the delay requirement of the service scenario where the terminal is located, and a functional relationship between the delay requirement of the service scenario where the terminal is located and the signal strength threshold are stored in the terminal. After the terminal determines the service scenario where the terminal is located, it searches for the second correspondence to acquire the delay requirement of the service scenario where the terminal is located, and then acquires the corresponding signal strength threshold through the above functional relationship.

In an illustrated embodiment, when the change trend is a stronger trend or a maintenance trend and the received signal strength of the terminal corresponding to the target time unit within the target time period is greater than or equal to the signal strength threshold, it is determined that the terminal is in the first signal scenario; when the change trend is the stronger trend or the maintenance trend and the received signal strength of the terminal corresponding to the target time unit within the target time period is smaller than the signal strength threshold, it is determined that the terminal is in the second signal scenario. Specifically, under the consideration of "equal to", the "equal to" may be attributed to "greater than", that is, greater than or equal to; or the "equal to" may be attributed to "smaller than", that is, smaller than or equal to, which is not limited in the present disclosure. When this kind of situation occurs again in the following, the above description shall prevail, which will not be repeated in the present disclosure. In an illustrated embodiment, the target time unit refers to the last time unit within the target time period. Since the received signal intensity for the last time unit within the target time period is close to the received signal intensity at a current moment, the received signal intensity at the current moment can be intuitively reflected by comparing a relationship between the received signal intensity of the last time unit and the signal intensity threshold, and the subsequent determination of the working mode is more accurate.

In other possible implementations, if an average value of the received signal strengths of the terminal within the target time period is greater than or equal to the signal strength threshold, it is determined that the terminal is in the first signal scenario; if the average value of the received signal strengths of the terminal within the target time period is smaller than the signal strength threshold, it is determined that the terminal is in the second signal scenario.

In an illustrated embodiment, when the change trend is the weaker trend, if the received signal strength of the terminal corresponding to the target time unit within the target time period is greater than or equal to the signal strength threshold, it is determined that the terminal is in the first signal scenario; when the change trend is the weaker trend, if the received signal strength of the terminal corresponding to the target time unit within the target time period is smaller than the signal strength threshold, it is determined that the terminal is in the second signal scenario. In an illustrated embodiment, the target time unit refers to the last time unit within the target time period.

In an illustrated embodiment, block 202b may be further realized by determining that the terminal is in the first signal scenario or the second signal scenario based on the change trend, the signal strength threshold, and a signal strength margin.

The signal strength margin is also a predefined parameter, which is represented by C. Illustratively, the signal strength margin is 2 decibels (dB). By setting the parameter of signal strength margin, the frequent switching of the terminal antenna between the SISO mode and the MIMO mode is avoided.

In an illustrated embodiment, when the change trend is the stronger trend or the maintenance trend, and the received signal strength of the terminal corresponding to the target time unit within the target time period is greater than or equal to a sum of the signal strength threshold and the signal strength margin, it is determined that the terminal is in the first signal scenario. When the change trend is the stronger trend or the maintenance trend, and the received signal strength of the terminal corresponding to the target time unit within the target time period is smaller than the sum of the signal strength threshold and the signal strength margin, it is determined that the terminal is in the second signal scenario. In an illustrated embodiment, the target time unit is the last time unit within the target time period.

The terminal compares the received signal strength corresponding to the last time unit within the target time period with the sum of the signal strength threshold and the signal strength margin, and determines that the terminal is in the stronger signal scenario if the received signal strength corresponding to the last time unit within the target time period is greater than or equal to the sum of the signal strength threshold and the signal strength margin; and determines that the terminal is in the weaker signal scenario if the received signal strength corresponding to the last time unit within the target time period is smaller than the sum of the signal strength threshold and the signal strength margin. In at least one embodiment, when the received signal strength RSSI of the terminal corresponding to the last time unit within the target time period is greater than or equal to RSSI_Thr+C, the terminal is in the stronger signal scenario; when the received signal strength RSSI of the terminal corresponding to the last time unit within the target time period is smaller than RSSI_Thr+C, the terminal is in the weaker signal scenario.

In an illustrated embodiment, if the change trend is the weaker trend, and the received signal strength of the terminal corresponding to the target time unit within the target time period is smaller than a difference between the signal strength threshold and the signal strength margin, it is determined that the terminal is in the second signal scenario; if the change trend is the weaker trend, and the received signal strength of the terminal corresponding to the target time unit within the target time period is greater than or equal to the difference between the signal strength threshold and the signal strength margin, it is determined that the terminal is in the first signal scenario.

The terminal compares the received signal strength corresponding to the last time unit within the target time period with the difference between the signal strength threshold and the signal strength margin, and determines that the terminal is in the weaker signal scenario if the received signal strength corresponding to the last time unit within the target time period is smaller than the difference between the signal strength threshold and the signal strength margin; determines that the terminal is in the stronger signal scenario if the received signal strength of the last time unit within the target time period is greater than or equal to a sum of the signal strength threshold and the signal strength margin. In at least one embodiment, when the received signal strength RSSI of the terminal within the target time period is greater than or equal to RSSI_Thr-C, the terminal is in the stronger signal scenario; when the received signal strength RSSI of the terminal within the target time period is smaller than RSSI_Thr-C, the terminal is in the weaker signal scenario.

In the technical solution provided by the embodiment of the present disclosure, whether the terminal antenna is in the stronger signal scenario or the weaker signal scenario is determined by the change trend, the signal strength threshold and the signal strength margin, and the signal strength threshold is used to preliminarily determine a signal strength, and the parameter of signal strength margin is set to avoid frequent switching of the terminal antenna between the SISO mode and the MIMO mode.

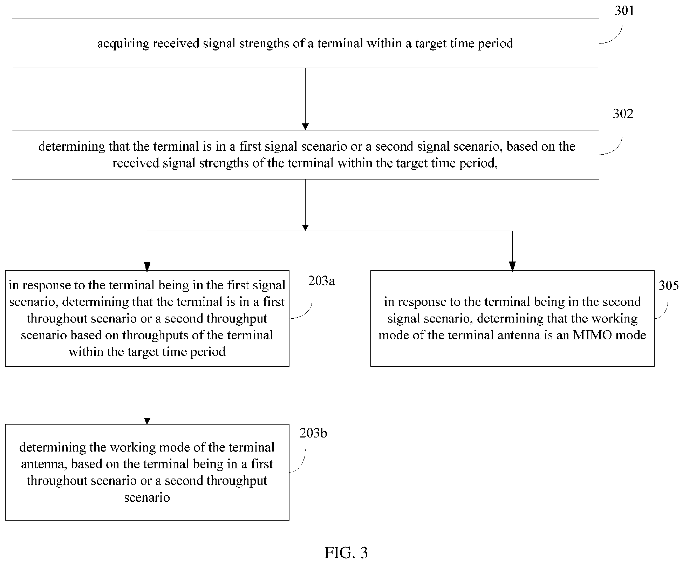

FIG. 3 illustrates a flowchart of another method for determining a working mode of a terminal antenna according to an embodiment of the present disclosure. In an illustrated embodiment provided based on the embodiment illustrated in FIG. 2, block 203 is implemented as block 203a and block 203b instead. The method may begin from block 301 to block 203b or block 305.

At block 301, received signal strengths of the terminal within a target time period are acquired.

At block 302, based on the received signal strengths of the terminal within the target time period, it is determined that the terminal is in a first signal scenario or a second signal scenario.

A signal strength corresponding to the first signal scenario is higher than that corresponding to the second signal scenario.

At block 203a, if the terminal is in the first signal scenario, it is determined that the terminal is in a first throughput scenario or a second throughput scenario based on throughputs of the terminal within the target time period.

A throughput corresponding to the first throughput scenario is greater than that corresponding to the second throughput scenario. The first throughput scenario is a higher throughput scenario, and the second throughput scenario is a lower throughput scenario.

In an illustrated embodiment, the terminal acquires an average value of the throughputs of the terminal within the target time period; determines that the terminal is in the first throughput scenario if the average value of the throughputs of the terminal within the target time period is greater than a throughput threshold; determines that the terminal is in the second throughput scenario if the average value of throughputs of the terminal within the target time period is smaller than the throughput threshold. The throughput threshold is a predefined parameter, which is expressed by T-PUT_Thr. Illustratively, the throughput threshold may be 30 Mps/s. The throughput threshold is used to distinguish the first throughput scenario from the second throughput scenario.

In an illustrated embodiment, the terminal acquires a maximum value of the throughputs of the terminal within the target time period; determines that the terminal is in the first throughput scenario if the maximum value of the throughputs of the terminal within the target time period is greater than the throughput threshold; determines that the terminal is in the second throughput scenario if the maximum value of the throughputs of the terminal within the target time period is smaller than the throughput threshold.

At block 203b, based on determining that the terminal is in the first throughput scenario or the second throughput scenario, the working mode of the terminal antenna is determined.

If the terminal is in the first throughput scenario, it is determined that the working mode of the terminal antenna is an MIMO mode. When the terminal is in the first throughput scenario, if a current working mode of the terminal antenna is the MIMO mode, the working mode of the terminal antenna remains unchanged; if the current working mode of the terminal antenna is the SISO mode, the working mode of the terminal antenna is controlled to switch from the SISO mode to the MIMO mode.

If the terminal is in the second throughput scenario, it is determined that the working mode of the terminal antenna is required to be the SISO mode. When the terminal is in the second throughput scenario, if a current working mode of the terminal antenna is the SISO mode, the working mode of the terminal antenna remains unchanged; if the current working mode of the terminal antenna is the MIMO mode, the working mode of the terminal antenna is controlled to switch from the MIMO mode to the SISO mode.

When the terminal is in a scenario with a stronger signal and a lower throughput, the service requirements can be meet if the working mode of the terminal antenna is the SISO mode. In this case, it is determined that the working mode of the terminal antenna is the SISO mode, which saves the power consumption of the terminal. When the terminal is in a scenario with a stronger signal and a higher throughput, the service requirements cannot be meet if the working mode of the terminal antenna is the SISO mode. In this case, it is determined that the working mode of the terminal antenna is the MIMO mode to improve the communication quality and the communication distance.

At block 305, if the terminal is in the second signal scenario, it is determined that the working mode of the terminal antenna is the MIMO mode.

When the terminal is in the weaker signal scenario, in order to make up for the problems of communication quality degradation and communication distance shortening caused by weaker signals, the terminal adopts the MIMO mode regardless of a higher or lower throughput to improve the communication quality and the communication distance.

When the terminal is in the second signal scenario, if the working mode of the terminal antenna is the MIMO mode, the working mode of the terminal antenna remains unchanged; if the working mode of the terminal antenna is the SISO mode, the working mode of the terminal antenna is switched to the MIMO mode.

In one example, it is assumed that RSSI_thr=-75 dBm, T-PUT_thr=30 Mbps/s, C=2dB, T0=10 seconds, T1 and T2=5 seconds. The terminal detects that the RSSIs in the first 5 seconds are -74 dBm, -72 dBm, -73dBm, -70 dBm and -70 dBm, respectively, and determines that the change trend of a signal strength is a stronger trend; the terminal determines that the terminal is currently in a stronger signal scenario due to -70>-75+2; the terminal detects throughputs of the first five seconds and acquires the throughputs 15 Mbps/s, 18Mbps/s, 20 Mbps/s, 22 Mbps/s and 16 Mbps/s, with an average value of 18.2 Mbps/s, which is smaller than 30 Mbps/s, and the terminal determines that the terminal is currently in the lower throughput scenario. Therefore, the terminal is currently in the scenario with the stronger signal and the lower throughput, and the SISO mode can fully meet the needs of users. If it is currently in the MIMO mode, it can be switched to SISO mode to reduce power consumption. The terminal can perform the next round of detection after waiting for 10 seconds.

In summary, in the technical solution provided by the embodiment of the present disclosure, when the terminal is in the stronger signal scenario and the throughput is larger within the target time period, it is determined that the terminal antenna should use the MIMO mode, so that the TRP and TIS of the terminal can be improved, thereby improving the communication quality and the communication distance; when the terminal is in the stronger signal scenario and the throughput is smaller within the target time period, it is determined that the terminal antenna should use the SISO mode, which can effectively save the power consumption of the terminal; when the terminal is in the weaker signal scenario within the target time period, in order to make up for the problems of communication quality degradation and communication distance shortening caused by weaker signals, the terminal should use the MIMO mode regardless of a higher or lower throughput to improve the communication quality and the communication distance.

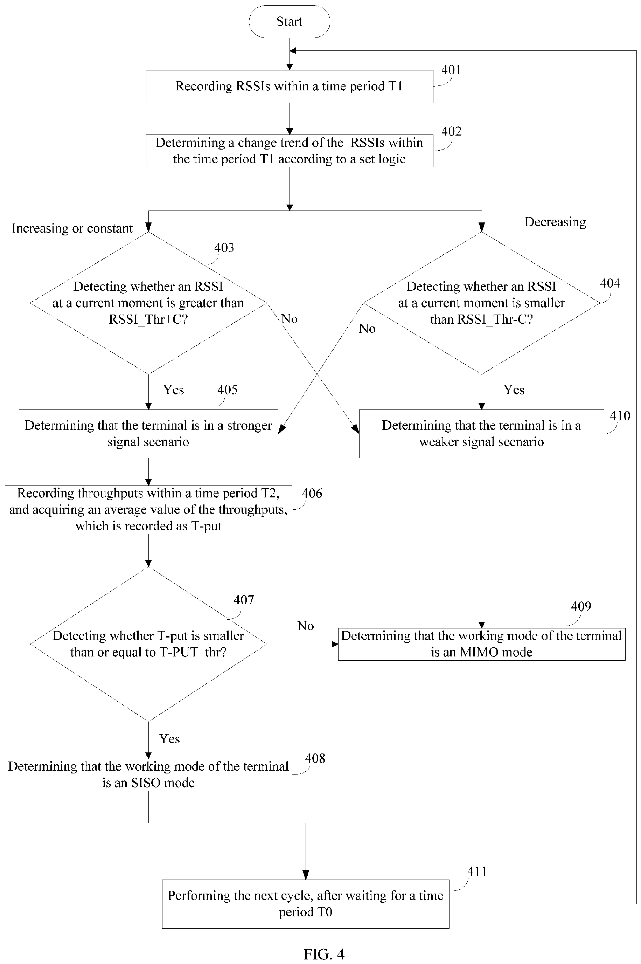

FIG. 4 illustrates a flowchart of still another method for determining a working mode of a terminal antenna according to an embodiment of the present disclosure, which may begin from block 401 to block 411.

At block 401, RSSIs within a time period T1 are recorded.

At block 402, a change trend of the RSSIs within the time period T1 is determined according to a set logic.

When the change trend of the RSSIs is a stronger trend or a maintenance trend, block 403 is executed; while when the change trend of RSSIs is a weaker trend, block 404 is executed.

At block 403, whether an RSSI at a current moment is greater than RSSI_Thr+C is detected.

If the RSSI at the current moment is greater than RSSI_Thr+C, block 405 is executed; if the RSSI at the current moment is smaller than or equal to RSSI_Thr+C, block 410 is executed.

At block 404, whether the RSSI at the current moment is smaller than RSSI_Thr-C is detected.

If the RSSI at the current moment is smaller than RSSI_Thr-C, block 405 is executed; if the RSSI at the current moment is greater than or equal to RSSI_Thr-C, block 410 is executed.

At block 405, it is determined that the terminal is in a stronger signal scenario.

At block 406, throughputs within a time period T2 are recorded, and an average value of the throughputs is acquired, which is recorded as T-put.

At block 407, whether T-put is smaller than or equal to T-PUT_thr is detected.

When T-put is smaller than or equal to T-PUT_thr, block 408 is executed; when T-put is greater than T-PUT_thr, block 409 is executed.

At block 408, it is determined that the working mode of the terminal antenna is an SISO mode.

When the terminal is in a scenario with a stronger signal and a lower throughput, it is determined that the working mode of the terminal antenna is the SISO mode. In an illustrated embodiment, the terminal detects whether the working mode of the terminal antenna currently is the SISO mode or the MIMO mode, and if the working mode of the terminal antenna is the SISO mode, it remains unchanged; if the working mode of the terminal antenna is the MIMO mode, the MIMO mode is switched to the SISO mode.

At block 409, it is determined that the working mode of the terminal antenna is the MIMO mode.

When the terminal is in a scenario with a stronger signal and a higher throughput, or in a scenario with a weaker signal, it is determined that the working mode of the terminal antenna should be the MIMO mode. In an illustrated embodiment, the terminal detects whether the working mode of the terminal antenna currently is the SISO mode or the MIMO mode, if the working mode of the terminal antenna is the MIMO mode, it remains unchanged; if the working mode of the terminal antenna is the SISO mode, the SISO mode is switched to the MIMO mode.

At block 410, it is determined that the terminal is in the weaker signal scenario.

After the terminal determines that it is in the weaker signal scenario, it performs block 409.

At block 411, the next cycle is performed after waiting for time T0.

The following is a device embodiment of the application. For parts not elaborated in detail in the device embodiment, refer to the technical details disclosed in the method embodiment.

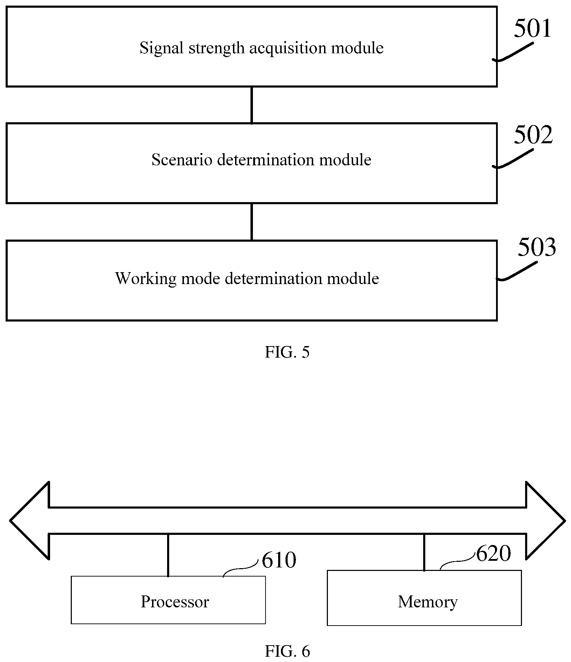

Referring to FIG. 5, a block diagram of an apparatus for determining an operating mode of a terminal antenna according to an exemplary embodiment of the present disclosure is illustrated. The apparatus for determining the operating mode of the terminal antenna is realized as a whole or a part of a terminal through software, hardware or a combination thereof. The apparatus for determining the working mode of the terminal antenna may include a signal strength acquisition module 501, a scenario determination module 502, and a working mode determination module 503.

The signal strength acquisition module 501 is configured to acquire received signal strengths of a terminal within a target time period.

The scenario determination module 502 is configured to determine that the terminal is in a first signal scenario or a second signal scenario based on the received signal strengths of the terminal within the target time period, where a signal strength corresponding to the first signal scenario is higher than that corresponding to the second signal scenario.

The working mode determination module 503 is configured to determine the working mode of the terminal antenna based on throughputs of the terminal within the target time period, when the terminal is in the first signal scenario.

In summary, in the technical solution provided by the embodiment of the application, the working mode of the terminal antenna is determined based on the throughputs of the terminal when the terminal is in the stronger signal scenario, so that the working mode of the terminal antenna can take both communication quality and power consumption of the terminal into consideration, and the power consumption of the terminal is saved on the premise of meeting service requirements. In at least one embodiment, when the terminal is in the stronger signal scenario and the throughputs are larger within the target time period, it is determined that the terminal antenna should use the MIMO mode, so that the TRP and TIS of the terminal can be improved, thereby improving the communication quality and the communication distance. For another example, when the terminal is in the stronger signal scenario and the throughputs are smaller within the target time period, it is determined that the terminal antenna should use the SISO mode, which can effectively save the power consumption of the terminal.

In an illustrated embodiment provided based on the embodiment illustrated in FIG. 5, the working mode determination module 503 is configured to:

determine that the terminal is in a first throughput scenario or a second throughput scenario based on the throughputs of the terminal within the target time period, where a throughput corresponding to the first throughput scenario is greater than that corresponding to the second throughput scenario;

determine the working mode of the terminal antenna based on the terminal being in the first throughput scenario or the second throughput scenario.

In an illustrated embodiment, the working mode determination module 503 is configured to

determine that the working mode of the terminal antenna is an MIMO mode, when the terminal is in the first throughput scenario;

determine that the working mode of the terminal antenna is an SISO mode, when the terminal is in the second throughput scenario.

In an illustrated embodiment, the apparatus may further include comprises a working mode switching module (not illustrated).

The working mode switching module is configured to:
switch the SISO mode to the MIMO mode, when the terminal is in the first throughput scenario and the working mode of the terminal antenna is the SISO mode; and
switch the MIMO mode to the SISO mode, when the terminal is in the second throughput scenario and the working mode of the terminal antenna is the MIMO mode.

In an illustrated embodiment provided based on the embodiment illustrated in FIG. 5, the working mode determination module 503 is configured to: determine that the working mode of the terminal antenna is the MIMO mode, when the terminal is in the second signal scenario.

In an illustrated embodiment provided based on the embodiment illustrated in FIG. 5, the scenario determination module 502 is configured to:

acquire a change trend of the received signal strengths of the terminal within the target time period;

determine that the terminal is in the first signal scenario or the second signal scenario based on the change trend and a signal strength threshold.

In an illustrated embodiment, the scenario determination module 502 is configured to:
determine that the terminal is in a first signal scenario, when the change trend is a stronger trend or a maintenance trend and the received signal strength of the terminal corresponding to the target time unit within the target time period is greater than or equal to the signal strength threshold;
determine that the terminal is in a second signal scenario, when the change trend is a strong trend and the received signal strength of the terminal corresponding to the target time unit within the target time period is smaller than the signal strength threshold.

In an illustrated embodiment, the target time unit refers to the last time unit within the target time period.

In an illustrated embodiment, the scenario determination module 502 is configured to:
determine that the terminal is in the first signal scenario or the second signal scenario based on the change trend, the signal strength threshold and a signal strength margin.

In an illustrated embodiment, the scenario determination module 502 is configured to:
compare the received signal strength of the terminal corresponding to the first time unit within the target time period with the received signal strength of the terminal corresponding to the last time unit within the target time period;
determine that the change trend is the weaker trend, when the received signal strength corresponding to the first time unit is greater than the received signal strength corresponding to the last time unit;
determine that the change trend is the stronger trend, when the received signal strength corresponding to the first time unit is smaller than the received signal strength corresponding to the last time unit;
determine that the change trend is the maintenance trend, when the received signal strength corresponding to the last time unit is equal to the received signal strength corresponding to the first time unit.

In an illustrated embodiment, the signal strength threshold is negatively correlated with a delay requirement of a service scenario where the terminal is located.

FIG. 6 illustrates a structural block diagram of a computer device according to an exemplary embodiment of the present disclosure. The computer device in the present disclosure may include one or more of the following components: a processor 610 and a memory 620.

The processor 610 may include one or more processing cores. The processor 610 connects various parts in the whole computer device with various interfaces and lines, and executes various functions of the computer device and processes data by running or executing instructions, programs, code sets or instruction sets stored in the memory 620 and calling data stored in the memory 620. In an illustrated embodiment, the processor 610 may be implemented in at least one hardware form of Digital Signal Processing (DSP), Field-Programmable Gate Array (FPGA) and Programmable Logic Array (PLA). One or more combinations of a Central Processing Unit (CPU) and a modem may be integrated in the processor 610. Specifically, the CPU is mainly used to deal with an operating system and an application program; and the modem is used to deal with wireless communication. It can be understood that the above modem may also be realized by a single chip without being integrated into the processor 610.

In an illustrated embodiment, when the processor 610 executes the program instructions in the memory 620, the method for determining the working mode of the terminal antenna according to the above-mentioned various method embodiments is implemented.

The memory 620 may include a Random Access Memory (RAM) or a Read-Only Memory (ROM). In an illustrated embodiment, the memory 620 includes a non-transitory computer-readable storage medium. The memory 620 may be used to store instructions, programs, codes, code sets or instruction sets. The memory 620 may include a program storage area and a data storage area, where the program storage area may store instructions for implementing the operating system, instructions for at least one function, instructions for implementing various method embodiments described above, and the like. The data storage area may store data created according to the use of computer device.

The structure of the above computer device is merely schematic, and in an actual implementation, the computer device may include more or less components, which is not limited by this embodiment.

Those skilled in the art should understand that the structure illustrated in FIG. 6 does not constitute a limitation to the computer device 600, and may include more or fewer components than those illustrated in FIG. 6, some components may be combined, or different component arrangements are adopted.

In an illustrated embodiment, an embodiment of the present disclosure provides a computer device, which includes a wireless communication chip, and the wireless communication chip stores computer instructions therein for executing the method for determining the working mode of the terminal antenna.

In an illustrated embodiment, a computer-readable storage medium is also provided, in which a computer program is stored therein, and the computer program is loaded and executed by a processor of a terminal to implement the method for determining the working mode of the terminal antenna in the above method embodiment.

In an illustrated embodiment, the computer-readable storage medium may be a read-only memory (ROM), a random access memory (RAM), a magnetic tape, a floppy disk, an optical data storage device, and the like.

In an exemplary embodiment, a computer program product is provided, which includes computer instructions stored in a computer-readable storage medium, which are read by a processor of a computer device from the computer-readable storage medium, and executed by the processor, so that the computer device performs the method for determining the working mode of the terminal antenna provided in the above aspect or the method for determining the working mode of the terminal antenna in various alternative implementations of the above aspect.

It should be understood that the term "multiple" mentioned herein means two or more. The term "and/or" is used to describe a relationship of related objects, and means that there may be three kinds of relationships, for example, A and/or B may mean that A exists alone, A and B exist together, and B exists alone. The character "/" generally indicates that the context objects have an "or" relationship. The words "first", "second" and similar words used herein do not indicate any order, quantity or importance, but are merely used to distinguish different components.

The above serial numbers of the embodiments of the present disclosure are merely for description and do not represent the advantages and disadvantages of the embodiments.

The above is merely an exemplary embodiment of the present disclosure, and is not used to limit the present disclosure. Any modification, equivalent substitution, improvement made within the spirit and principle of the present disclosure should be included in the scope of protection of the present disclosure.

## Claims

1. A method for determining a working mode of a terminal antenna, comprising:
acquiring received signal strengths of a terminal within a target time period;
determining that the terminal is in a first signal scenario or a second signal scenario based on the received signal strengths of the terminal within a target time period, wherein a signal strength corresponding to the first signal scenario is higher than that corresponding to the second signal scenario; and
in response to the terminal being in the first signal scenario, determining the working mode of the terminal antenna based on throughputs of the terminal within the target time period.

2. The method according to claim 1, wherein the determining the working mode of the terminal antenna based on throughputs of the terminal within the target time period comprises:
determining that the terminal is in a first throughput scenario or a second throughput scenario based on the throughputs of the terminal within the target time period, wherein a throughput corresponding to the first throughput scenario is greater than that corresponding to the second throughput scenario; and
determining the working mode of the terminal antenna based on the terminal being in the first throughput scenario or the second throughput scenario.

3. The method according to claim 2, wherein determining the working mode of the terminal antenna based on the terminal being in the first throughput scenario or the second throughput scenario comprises:
in response to the terminal is in the first throughput scenario, determining the working mode of the terminal is a multiple-input multiple-output (MIMO) mode;
in response to the terminal is in the second throughput scenario, determining the working mode of the terminal is a single-input single-output (SISO) mode.

4. The method according to claim 3, further comprising:
after the determining the working mode of the terminal is the MIMO mode, when the working mode of the terminal is the SISO mode, switching the SISO mode to the MIMO mode;
after the determining the working mode of the terminal is the SISO mode, when the working mode of the terminal is the MIMO mode, switching the SISO mode to the MIMO mode.

5. The method according to claim 2, wherein the determining that the terminal is in a first throughput scenario or a second throughput scenario based on the throughputs of the terminal within the target time period comprises:
acquiring an average value of the throughputs of the terminal within the target time period;
in response to the average value of the throughputs of the terminal within the target time period being greater than a throughput threshold, determining that the terminal is in the first throughput scenario; and
in response to the average value of the throughputs of the terminal within the target time period being smaller than the throughput threshold, determining that the terminal is in the second throughput scenario.

6. The method according to claim 1, further comprising:
in response to the terminal being in the second signal scenario, determining the working mode of the terminal antenna is an MIMO mode.

7. The method according to any one of claims 1-6, wherein the determining that the terminal is in a first signal scenario or a second signal scenario based on the received signal strengths of the terminal within a target time period comprises:
acquiring a change trend of the received signal strengths of the terminal within the target time period; and
determining that the terminal is in the first signal scenario or the second signal scenario based on the change trend and a signal strength threshold.

8. The method according to claim 7, wherein the determining that the terminal is in the first signal scenario or the second signal scenario based on the change trend and a signal strength threshold comprises:
in response to the change trend being a stronger trend or a maintenance trend, and the received signal strength of the terminal corresponding to a target time unit within the target time period is greater than the signal strength threshold, determining that the terminal is in the first signal scenario; and
in response to the change trend being a weaker trend, and the received signal strength of the terminal corresponding to the target time unit within the target time period is smaller than the signal strength threshold, determining that the terminal is in the second signal scenario.

9. The method according to claim 8, wherein the target time unit is the last time unit within the target time period.

10. The method according to claim 7, wherein the determining that the terminal is in the first signal scenario or the second signal scenario based on the change trend and a signal strength threshold comprises:
determining that the terminal is in the first signal scenario or the second signal scenario based on the change trend, the signal strength threshold, and a signal strength margin.

11. The method according to claim 7, wherein the acquiring a change trend of the received signal strengths of the terminal within the target time period comprises:
comparing the received signal strength of the terminal corresponding to the first time unit within the target period with the received signal strength corresponding to the last time unit;
in response to the received signal strength corresponding to the first time unit being greater than the received signal strength corresponding to the last time unit, determining that the change trend is a weaker trend;
in response to the received signal strength corresponding to the first time unit being smaller than the received signal strength corresponding to the last time unit, determining that the change trend is a stronger trend; and
in response to the received signal strength corresponding to the first time unit being equal to the received signal strength corresponding to the last time unit, determining that the change trend is a maintenance trend.

12. The method according to claim 7, wherein the signal strength threshold is negatively correlated with a delay requirement of a service scenario where the terminal is located.

13. An apparatus for determining a working mode of a terminal antenna, comprising:
a signal strength acquisition module, configured to acquire received signal strengths of a terminal within a target time period;
a scenario determination module, configured to determine that the terminal is in a first signal scenario or a second signal scenario based on the received signal strengths of the terminal within a target time period, wherein a signal strength corresponding to the first signal scenario is higher than that corresponding to the second signal scenario; and
a working mode switching module, configured to: in response to the terminal being in the first signal scenario, determining the working mode of the terminal antenna based on throughputs of the terminal with the target time period.

14. The apparatus according to claim 13, wherein the working mode switching module is further configured to:
determine that the terminal is in a first throughput scenario or a second throughput scenario based on the throughputs of the terminal within the target time period, wherein a throughput corresponding to the first throughput scenario is greater than that corresponding to the second throughput scenario; and
determine the working mode of the terminal antenna based on the terminal being in the first throughput scenario or the second throughput scenario.

15. The apparatus according to claim 13, wherein the working mode switching module is further configured to:
in response to the terminal being in the second signal scenario, determine the working mode of the terminal antenna is an MIMO mode.

16. The apparatus according to any one of claims 13-15, wherein the scenario determination module is configured to:
acquire a change trend of the received signal strengths of the terminal within the target time period;
determine that the terminal is in the first signal scenario or the second signal scenario based on the change trend and a signal strength threshold.

17. The apparatus according to claim 16, wherein the scenario determination module is configured to:
determine that the terminal is in the first signal scenario or the second signal scenario based on the change trend, the signal strength threshold, and a signal strength margin.

18. A terminal, comprising a processor, a memory and a wireless communication chip, wherein computer instructions are stored in the memory, and the wireless communication chip is configured to load and execute the computer instructions to implement the method for determining the working mode of the terminal antenna according to any one of claims 1-12.

19. A computer-readable storage medium, wherein a computer program is stored in the computer-readable storage medium, and the computer program is loaded and executed by a processor to implement the method for determining the working mode of the terminal antenna according to any one of claims 1-12.

20. A computer program product, comprising computer instructions stored in a computer-readable storage medium, wherein the computer instructions are capable of being read by a processor from the computer-readable storage medium and executed by the processor to implement the method for determining the working mode of the terminal antenna according to any one of claims 1-12.
